# EUROPÄISCHE PATENTANMELDUNG

(11) **EP 3 143 857 A1**
(43) Veröffentlichungstag der Anmeldung: **22.03.2017**
(21) Anmeldenummer: 16401056.3
(22) Anmeldetag: 05.09.2016
(51) Int. Cl.: A01C 15/00, A01C 15/12, E01C 19/20

(54) **VERTEILMASCHINE**

(30) Priorität: 18.09.2015 DE 102015115759
(71) Anmelder: Amazonen-Werke H. Dreyer GmbH & Co. KG, 49205 Hasbergen (DE)
(72) Erfinder: Hörnschemeyer, Hubert, 49134 Wallenhorst (DE); Dieckmann, Michael, 48161 Münster (DE)

(57) **Zusammenfassung**

Verteilmaschine, insbesondere Düngerstreuer, insbesondere zum Ausbringen von körnigem Material, mit einem Rahmen (1), einem Fahrwerk (2), einer Zugdeichsel (5) und einem auf dem Rahmen befestigten Vorratsbehälter (6) und zumindest einem Streuorgan (12) zum Verteilen des körnigen Materials und zumindest einem Transportband (7) zum Materialfördern von dem Behälter zu dem Streuorgan, welches vorzugsweise zwei um aufrechte und beabstandet zueinander angeordnete Achsen rotierende, mit Wurfschaufeln besetzte Schleuderscheiben aufweist, wobei der Vorratsbehälter als in Fahrtrichtung langgestreckter Behälter ausgebildet ist und im unteren Bereich des Vorratsbehälters ein über Umlenkrollen (13) geführtes, umlaufend angetriebenes Transportband (11), welches sich über die gesamte untere Breite des Vorratsbehälters erstreckt, angeordnet ist, wobei die sich in Längsrichtung des Vorratsbehälters erstreckenden und gegenüberliegend angeordneten Vorratsbehälterwände (7) von unten nach oben über zumindest einen Teilbereich ihrer Höhenerstreckung in geneigter Weise schräg und trichterförmig auseinander laufend zueinander angeordnet sind, wobei zwischen dem Ende des Transportbandes und dem Streuorgan eine Übergabeeinrichtung (15) mit einem unteren Übergabebereich (16) zur Übergabe des körnigen Materials von dem Transportband an das Streuorgan angeordnet ist, wobei der Übergabebereich des körnigen Materiales an das Streuorgan in einen größeren Abstand als unteren Enden der gegenüberliegend angeordneten Vorratsbehälterwände zueinander angeordnet sind, wobei die Vorratsbehälterwände sich nach der hinteren Vorratsbehälterwand und der in dieser hinteren Vorratsbehälterwand angeordneten Behälteraustrittsöffnung (14) durch sich an die Oberseite des Transportbandes anschließende Leitwände (18) zur Führung des Materiales zu dem Streuorgan verlängert sind. Um mit einfachen Mitteln die Materialzuführung von dem angetriebenen Förderband eines langgestreckten Vorratsbehälters zu zumindest zwei weit auseinander liegenden Zuführorganen eines Streuorgans zu verbessern, ist vorgesehen, dass die in Fortsetzung der Vorratsbehälterwände angeordneten Leitwände zumindest die Neigung nach außen wie die Vorratsbehälterwände aufweisen.

## Beschreibung

Die Erfindung betrifft eine Verteilmaschine gemäß des Oberbegriffes des Patentanspruches 1.

Eine derartige Verteilmaschine ist in der EP 1 088 475 A1 beschrieben. Diese Verteilmaschine ist als Großflächendüngerstreuer ausgebildet und weist einen langgestreckten Vorratsbehälter auf. Die seitlichen Vorratsbehälterwände sind trichterförmig zueinander angeordnet. Der Vorratsbehälter wird auf seiner Rückseite durch eine Behälterrückwand abgeschlossen. In dieser Behälterrückwand ist zumindest eine Behälteraustrittsöffnung angeordnet, die einen kleineren Querschnitt als der von den trichterförmig zueinander angeordneten Vorratsbehälterwände aufweist. An die Behälteraustrittsöffnung schließen sich vertikal stehende Leitwände an. Diese Leitwände dienen zur Führung des Materials zu dem Streuorgan. Durch die Verengung der Behälteraustrittsöffnung und der Leitwände gegenüber den trichterförmig zueinander angeordneten Vorratsbehälterwänden kommt es zu Behinderungen bei der Materialförderung aus dem Vorratsbehälter zu dem am Ende und unterhalb des dem Vorratsbehälter nach unten abschließenden und motorisch angetriebenen Transportbandes. Die Leitwände zur Führung des auszubringenden Materiales von dem Vorratsbehälter zu dem Streuorgan sind in einem engen Abstand zueinander angeordnet. Somit ist es relativ problematisch den Dünger auf zwei weit auseinander liegenden Schleuderscheiben des Streuorgans ohne Staupotenzial zuzuleiten.

Der Erfindung liegt die Aufgabe zu Grunde, mit einfachen Mitteln die Materialzuführung von dem angetriebenen Förderband eines langgestreckten Vorratsbehälters zu zumindest zwei weit auseinander liegenden Zuführorganen eines Streuorgans zu verbessern.

Diese Aufgabe der erfindungsgemäß dadurch gelöst, dass die in Fortsetzung der Vorratsbehälterwände angeordneten Leitwände zumindest die Neigung nach außen wie die Vorratsbehälterwände aufweisen.

Infolge dieser Maßnahme wird der Förderquerschnitt, der durch die trichterförmig zueinander angeordneten Vorratsbehälterwände vorgegeben ist, durch die sich nach der Behälteraustrittsöffnung anschließenden Leitwände nicht verringert. Hierbei ist es selbstverständlich auch die Behälteraustrittsöffnung in ihrer Ausgestaltung und/oder Kontur an diese Förderquerschnitte entsprechend angepasst ausgebildet. Somit kann von dem als Förderband ausgebildeten Transportband das Material ohne Behinderung aus dem Vorratsbehälter zu dem Streuorgan geleitet werden. Es ergibt sich also eine wesentlich bessere Materialförderung zu weit auseinander liegenden Materialeinleitorganen.

Eine weitere Verbesserung der Materialzuleitung und Materialförderung zu weit auseinander liegenden Materialeinleitorganen für ein Streuorgan lässt sich dadurch erreichen, dass die Leitwände stärker als die Vorratsbehälterwände nach außen geneigt angeordnet sind. Hierdurch wird eine störungslose Materialförderung ermöglicht.

Um eine seitliche Expansion und Ausdehnung des vom Transportband geförderten Materialstromes zu den weit auseinander liegenden Materialeinleitorganen zu ermöglichen, ist vorgesehen, dass die Leitwände flacher als die Vorratsbehälterwände angeordnet sind. Hierdurch lässt sich eine wesentlich bessere Aufspreizung des von dem Transportband geförderten Materialstromes erreichen. Der geförderte Materialstromes kann so über die erfindungsgemäß geneigten Seitenwände nach außen zu den weit auseinander liegenden Materialeinleitorganen strömen. Somit kann das von dem Transportband aus dem Behälter geförderte Material, beispielsweise Dünger, schon vor Erreichen des Streuorgans und der divergierenden Zuführtrichter zu den Materialverteilorganen sich seitlich ausbreiten. Somit kann auch ein vernünftiges Höhenniveau von dem Transportband zu den weit auseinander liegenden Materialverteilorganen des Streuorgans gewährleistet werden. Somit wird also die Auslaufgeometrie in seitlicher Richtung geöffnet und/oder verbreitert.

Die Zuleitung des von dem Transportband geförderten Materialstromes zu den weit auseinander liegenden Materialeinleitorganen lässt sich noch weiter dadurch verbessern, dass die Leitflächen der Leitwände zusätzlich in Förderrichtung des Transportbandes abfallend angeordnet sind.

Eine vorteilhafte Zuführung des von dem Transportband geförderten Materialstromes zu dem Streuorgan wird dadurch erreicht, dass zwischen dem Abwurfende des Transportbandes und dem Streuorgan zwei beabstandete Zuführtrichter, die durch ein dachförmiges Mittelteil miteinander verbunden sind, angeordnet sind.

Bei einer Verteilmaschine, bei der das Streuorgan als Zentrifugalstreuwerk mit zwei beabstandet zueinander und um aufrechte Achsen rotierenden und Wurfschaufeln aufweisende Schleuderscheiben ausgebildet ist und die Achsen der Schleuderscheiben und die Aufgabeflächen des körnigen Materiales auf die Schleuderscheiben in einen größeren Abstand als unteren Enden der gegenüberliegend angeordneten Vorratsbehälterwände zueinander angeordnet sind, ist vorgesehen, dass die Achsen der Schleuderscheiben und/oder die Aufgabeflächen des körnigen Materiales auf die Schleuderscheiben in einem größeren Abstand als die unteren Bereiche der Vorratsbehälterwände zueinander angeordnet sind. Mit einer derartig ausgestaltete Verteilmaschine lässt sich das auszubringende körnigem Material, welches staulos der Schleuderscheiben zugeleitet werden kann, über große Arbeitsbreiten verteilen.

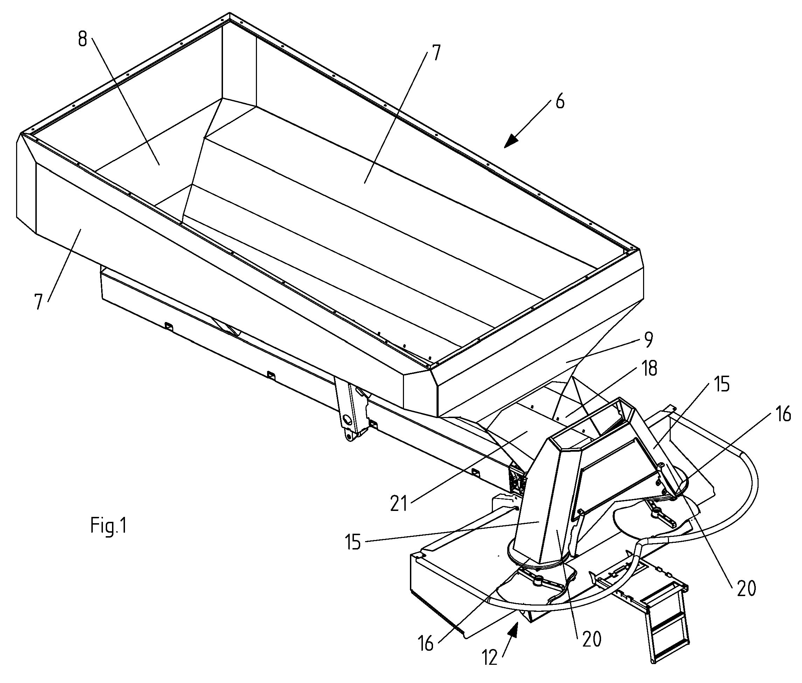

Weitere Einzelheiten der Erfindung sind der Beispielsbeschreibung und den Zeichnungen zu entnehmen. Die Zeichnungen zeigen
- Fig.1: die als Großflächendüngerstreuer ausgebildete Verteilmaschine ohne Tragrahmen, Fahrwerk und Zugdeichsel in Prinzipdarstellung und in perspektivischer Darstellung in der Ansicht von schräg hinten,

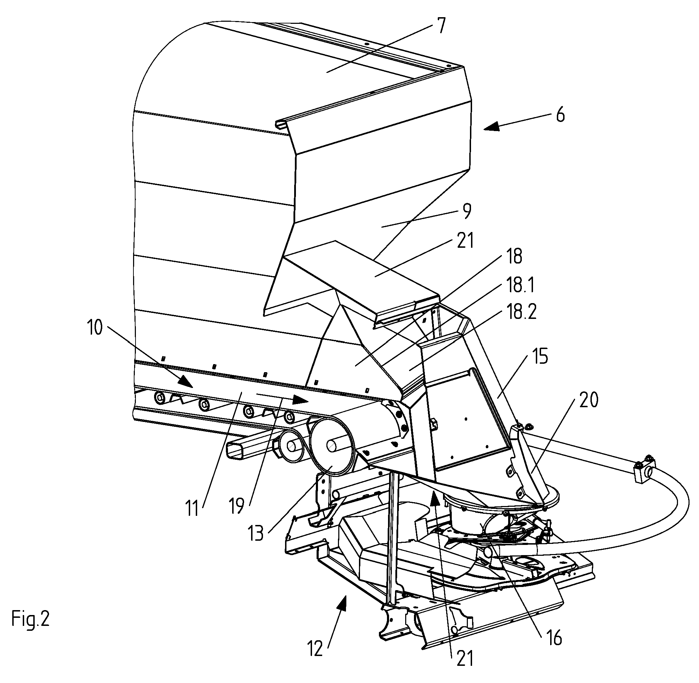

- Fig.2: den hinteren Bereich des Großflächendüngerstreuers in Prinzipdarstellung und in perspektivischer Darstellung sowie im Schnitt V - V,

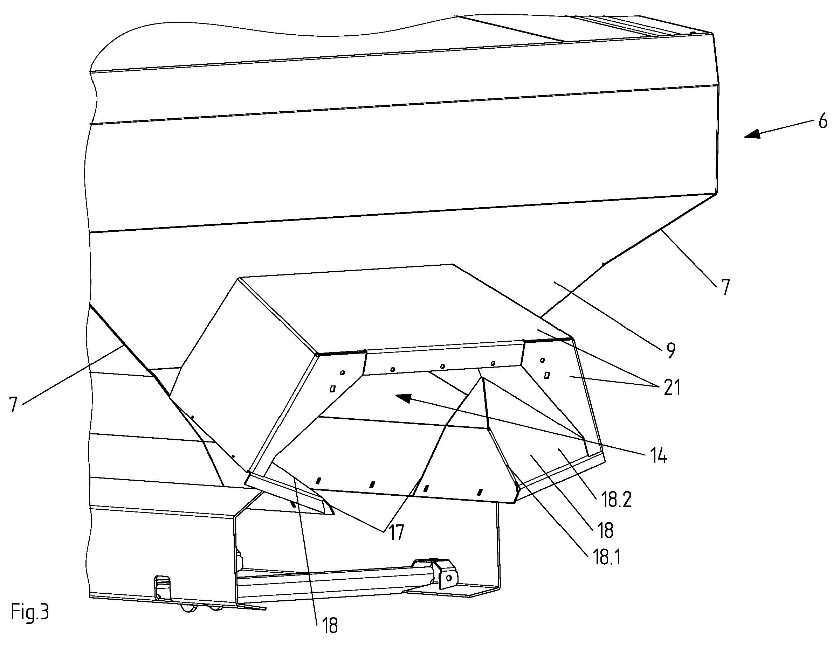

- Fig.3: den hinteren Bereich des Großflächendüngerstreuers in Prinzipdarstellung und in perspektivischer Darstellung in der Ansicht schräg von hinten, jedoch ohne Zufuhrtrichter und Streuorgan,

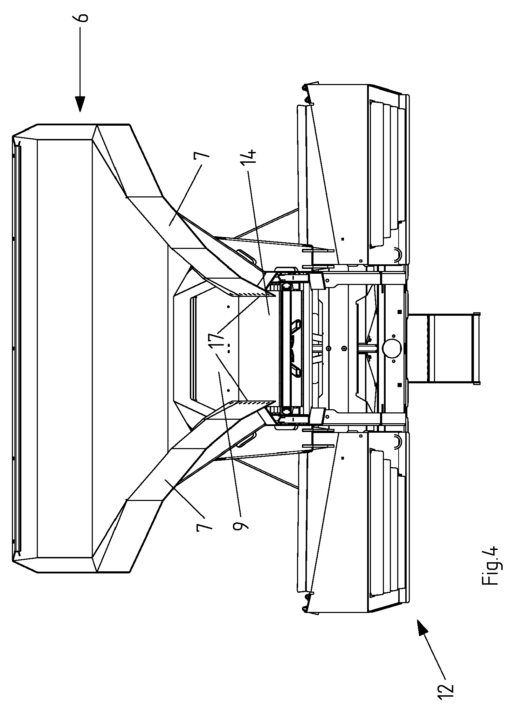

- Fig.4: den Großflächendüngerstreuer in Prinzipdarstellung und im Schnitt IV - IV,

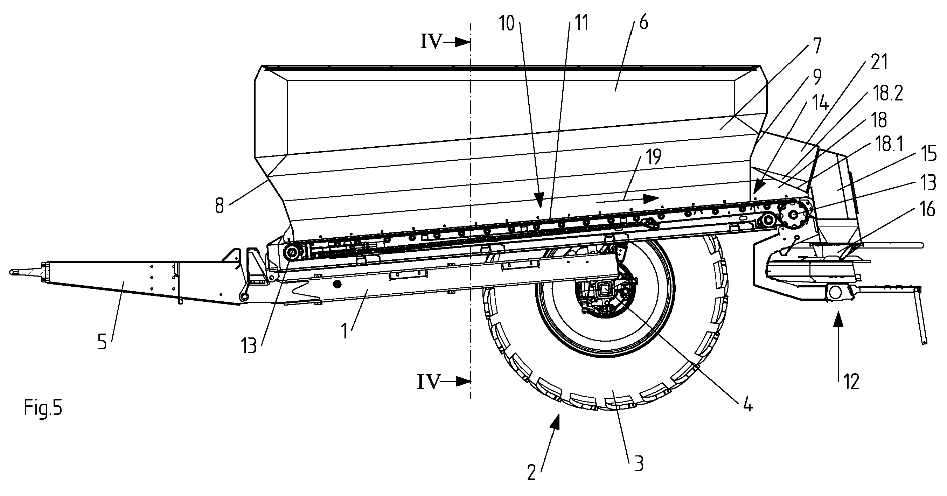

- Fig.5: den Großflächendüngerstreuer in Prinzipdarstellung und im Schnitt V - V und

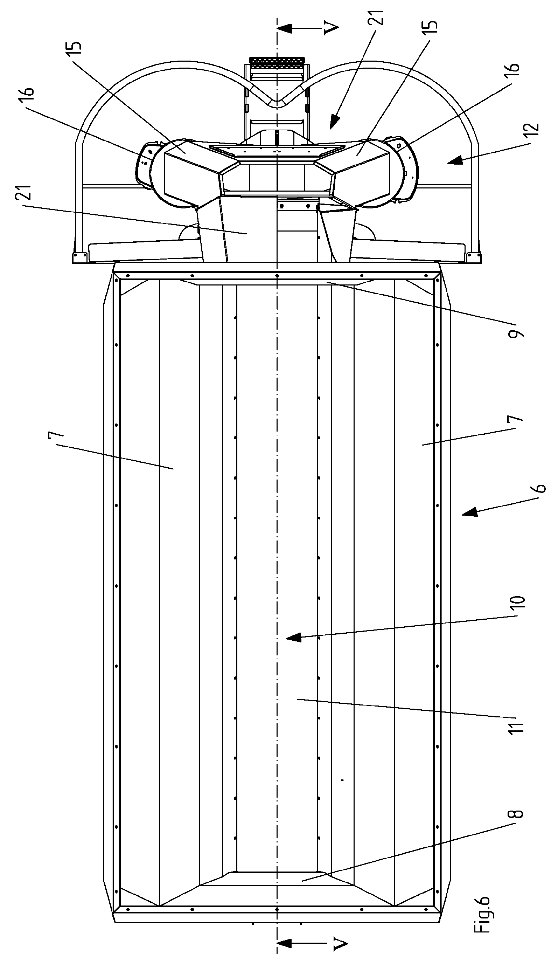

- Fig.6: den Großflächendüngerstreuer in Prinzipdarstellung und in Draufsicht.

Die als Großflächendüngerstreuer ausgebildete Verteilmaschine weist den Tragrahmen 1, der sich über das Fahrwerk 2 mit den Laufrädern 3 und der Achse 4 im hinteren Bereich auf dem Boden und über die am vorderen Bereich des Tragrahmens 1 angeordnete Zugdeichsel 5 an einer Vorrichtung eines nicht dargestellten Ackerschleppers abstützt, auf. Auf dem Tragrahmen 1 ist der Vorratsbehälter 6 angeordnet und befestigt. Der Vorratsbehälter 6 weist die beiden seitlichen Vorratsbehälterwände 7 auf, die trichterförmig zueinander angeordnet sind. Hierbei sind die sich in Längsrichtung des Vorratsbehälters 6 erstreckenden und gegenüberliegend angeordneten Vorratsbehälterwände 7 von unten nach oben über zumindest einen Teilbereich ihrer Höhenerstreckung in geneigter Weise schräg und trichterförmig auseinander laufend zueinander angeordnet. Weiterhin weist der Vorratsbehälter 6 eine vordere Vorratsbehälterwand 8 und eine hintere Vorratsbehälterwand 9 auf. Der Vorratsbehälter 6 weist einen Boden 10 auf, der als ein Transportband 11 zum Materialfördern aus in dem Behälter 6 enthaltenen körnigem Material zu einem am hinteren Ende des Transportbandes angeordneten Streuorgan 12. Dieses Streuorgan 12 weist zwei um aufrechte und in einem größeren Abstand beabstandet zueinander angeordnete Achsen rotierend angetriebene mit Wurfschaufeln besetzten Schleuderscheiben in nicht dargestellter Weise auf. Das Transportband 11 ist im unteren Bereich des Vorratsbehälters 6 angeordnet und als ein über Umlenkrollen 13 geführtes, umlaufend angetriebenes Förderband ausgebildet. Das Transportband 11 erstreckt sich über die gesamte untere Breite des Vorratsbehälters 6. In der hinteren Vorratsbehälterwand 9 ist eine Durchtrittsöffnung 14 angeordnet, durch welche das Förderband 11 das sich im Vorratsbehälter 6 befindliche körnige Material über Leiteinrichtungen 15 den Schleuderscheiben des Streuorgan 12 zuleitet. Diese zwischen dem Ende des Transportbandes 11 und dem Streuorgan 12 angeordnete und als Leiteinrichtung 15 ausgebildete Übergabeeinrichtung weist einen unteren Übergabebereich 16 zur Übergabe des körnigen Materials von dem Transportband 7 an das Streuorgan 12 auf.

Die untere Enden des Übergabebereiches 16 der Leiteinrichtung 15 zur Übergabe des körnigen Materiales an das Streuorgan 12 sind in einen größeren Abstand als unteren Enden 17 der gegenüberliegend angeordneten Vorratsbehälterwände 7 zueinander angeordnet. Die Vorratsbehälterwände 7 sind nach der hinteren Vorratsbehälterwand 9 und der in dieser hinteren Vorratsbehälterwand 9 angeordneten Behälteraustrittsöffnung 14 durch sich an die Oberseite des Transportbandes 11 anschließenden Leitwände 18 zur Führung des Materiales über die Leiteinrichtung 15 zu dem Streuorgan 12 verlängert. Die in Fortsetzung der Vorratsbehälterwände 7 angeordneten Leitwände 18 zumindest eine Neigung nach außen, die der Neigung der Vorratsbehälterwände 7 entspricht.

Im bevorzugten Ausführungsbeispiel sind die Leitwände 18 zumindest in ihrem oberen Bereich 18.1 stärker als die Vorratsbehälterwände 7 nach außen geneigt angeordnet. Somit sind die Leitwände 18 zumindest flacher als die Vorratsbehälterwände 7 angeordnet. Zusätzlich sind die Leitflächen 18.2 der Leitwände 18 in ihrem oberen Bereich 18.1 in Förderrichtung 19 des Transportbandes 11 abfallend angeordnet.

Weiterhin sind wischen dem Abwurfende des Transportbandes 11 und dem Streuorgan 12 zwei beabstandete Zuführtrichter 20 der Leiteinrichtung 15, die durch ein dachförmiges Mittelteil 21 miteinander verbunden sind, angeordnet.

Das als Zentrifugalstreuwerk ausgebildete Streuorgan 12 weist in nicht dargestellter Weise zwei beabstandet zueinander und um aufrechte Achsen rotierende und Wurfschaufeln aufweisende Schleuderscheiben auf. Die Achsen der Schleuderscheiben und die Aufgabeflächen des körnigen Materiales auf die Schleuderscheiben sind in einen größeren Abstand als unteren Enden der gegenüberliegend angeordneten Vorratsbehälterwände 7 zueinander angeordnet. Die Achsen der Schleuderscheiben und/oder die Aufgabeflächen des körnigen Materiales auf die Schleuderscheiben sind in einem größeren Abstand als die unteren Bereiche der Vorratsbehälterwände 7 zueinander angeordnet.

Durch die vorbeschrieben erfindungsgemäßen Maßnahmen wird der Förderquerschnitt, der durch die trichterförmig zueinander angeordneten Vorratsbehälterwände 7 vorgegeben ist, durch die sich nach der Behälteraustrittsöffnung 14 anschließenden Leitwände 18 nicht verringert. Hierbei ist es selbstverständlich auch die Behälteraustrittsöffnung 14 in ihrer Ausgestaltung und/oder Kontur an diese Förderquerschnitte entsprechend angepasst ausgebildet. Somit kann von dem als Förderband ausgebildeten Transportband 7 das Material ohne Behinderung aus dem Vorratsbehälter 6 zu dem Streuorgan 12 geleitet werden. Es ergibt sich also eine wesentlich bessere Materialförderung zu weit auseinander liegenden Materialeinleitorganen 15.

Durch die vorbeschrieben Ausgestaltung der Leitwände 18 wird eine seitliche Expansion und Ausdehnung des vom Transportband 7 geförderten Materialstromes zu den weit auseinander liegenden Materialeinleitorganen 15 zu ermöglicht. So lässt sich eine ausrechende Aufspreizung des von dem Transportband geförderten Materialstromes erreichen. Der geförderte Materialstromes kann so über die erfindungsgemäß geneigten Leitwände 18 nach außen zu den weit auseinander liegenden Materialeinleitorganen strömen. Somit kann das von dem Transportband 7 aus dem Behälter 6 geförderte Material, beispielsweise Dünger, schon vor Erreichen des Streuorgans 12 und der divergierenden Zuführtrichter 20 zu den Materialverteilorganen 12 sich seitlich ausbreiten. Auch kann so auch ein vernünftiges Höhenniveau von dem Transportband 7 zu den weit auseinander liegenden Materialverteilorganen des Streuorgans 12 gewährleistet werden. Somit wird also die Auslaufgeometrie in seitlicher Richtung geöffnet und/oder verbreitert.

Auf der oberen Seite ist der von den Leitwänden 18 geschaffene Expansions- und Förderbereich durch einen als Abdeckhaube 21 ausgebildetes Abdeckelement abgedeckt.

## Patentansprüche

1. Verteilmaschine, insbesondere Düngerstreuer, insbesondere zum Ausbringen von körnigem Material, mit einem Rahmen (1), einem Fahrwerk (2), einer Zugdeichsel (5) und einem auf dem Rahmen (1) befestigten Vorratsbehälter (6) und zumindest einem Streuorgan (12) zum Verteilen des körnigen Materials und zumindest einem Transportband (7) zum Materialfördern von dem Behälter (6) zu dem Streuorgan (12), welches vorzugsweise zwei um aufrechte und beabstandet zueinander angeordnete Achsen rotierende, mit Wurfschaufeln besetzte Schleuderscheiben aufweist, wobei der Vorratsbehälter (6) als in Fahrtrichtung langgestreckter Behälter ausgebildet ist und im unteren Bereich des Vorratsbehälters (6) ein über Umlenkrollen (13) geführtes, umlaufend angetriebenes Transportband (11), welches sich über die gesamte untere Breite des Vorratsbehälters (6) erstreckt, angeordnet ist, wobei die sich in Längsrichtung des Vorratsbehälters (6) erstreckenden und gegenüberliegend angeordneten Vorratsbehälterwände (7) von unten nach oben über zumindest einen Teilbereich ihrer Höhenerstreckung in geneigter Weise schräg und trichterförmig auseinander laufend zueinander angeordnet sind, wobei zwischen dem Ende des Transportbandes (11) und dem Streuorgan (12) eine Übergabeeinrichtung (15) mit einem unteren Übergabebereich (16) zur Übergabe des körnigen Materials von dem Transportband (11) an das Streuorgan (12) angeordnet ist, wobei der Übergabebereich (16) des körnigen Materiales an das Streuorgan (12) in einen größeren Abstand als unteren Enden (17) der gegenüberliegend angeordneten Vorratsbehälterwände (7) zueinander angeordnet sind, wobei die Vorratsbehälterwände (7) sich nach der hinteren Vorratsbehälterwand (9) und der in dieser hinteren Vorratsbehälterwand (9) angeordneten Behälteraustrittsöffnung (14) durch sich an die Oberseite des Transportbandes (11) anschließende Leitwände (18) zur Führung des Materiales zu dem Streuorgan (12) verlängert sind, **dadurch gekennzeichnet, dass** die in Fortsetzung der Vorratsbehälterwände (7) angeordneten Leitwände (18,18.1,18.2) zumindest die Neigung nach außen wie die Vorratsbehälterwände (7) aufweisen.

2. Verteilmaschine nach Anspruch 1, **dadurch gekennzeichnet, dass** die Leitwände (18,18.1,18.2) stärker als die Vorratsbehälterwände (7) nach außen geneigt angeordnet sind.

3. Verteilmaschine nach zumindest einem der vorstehenden Ansprüche, **dadurch gekennzeichnet, dass** die Leitwände (18.2) flacher als die Vorratsbehälterwände (7) angeordnet sind.

4. Verteilmaschine nach zumindest einem der vorstehenden Ansprüche, **dadurch gekennzeichnet, dass** die Leitfläche (18.2) der Leitwände (18) zusätzlich in Förderrichtung (19) des Transportbandes (11) abfallend angeordnet sind.

5. Verteilmaschine nach zumindest einem der vorstehenden Ansprüche, **dadurch gekennzeichnet, dass** zwischen dem Abwurfende des Transportbandes (11) und dem Streuorgan (12) zwei beabstandete Zuführtrichter (20), die durch ein dachförmiges Mittelteil (21) miteinander verbunden sind, angeordnet sind.

6. Verteilmaschine nach zumindest einem der vorstehenden Ansprüche, wobei das Streuorgan (12) als Zentrifugalstreuwerk mit zwei beabstandet zueinander und um aufrechte Achsen rotierenden und Wurfschaufeln aufweisende Schleuderscheiben ausgebildet ist, wobei die Achsen der Schleuderscheiben und die Aufgabeflächen des körnigen Materiales auf die Schleuderscheiben in einen größeren Abstand als unteren Enden (17) der gegenüberliegend angeordneten Vorratsbehälterwände (7) zueinander angeordnet sind, nach Anspruch 5, **dadurch gekennzeichnet, dass** die Achsen der Schleuderscheiben und/oder die Aufgabeflächen des körnigen Materiales auf die Schleuderscheiben in einem größeren Abstand als die unteren Bereiche (17) der Vorratsbehälterwände (7) zueinander angeordnet sind.
